# EUROPEAN PATENT APPLICATION

(11) **EP 4 556 450 A1**
(43) Date of publication of application: **21.05.2025**
(21) Application number: 24210002.2
(22) Date of filing: 30.10.2024
(51) Int. Cl.: C04B 30/02, C04B 35/20, C04B 35/80, C04B 111/28

(54) **PROCESS FOR THE PREPARATION OF A HEAT-INSULATING AND FIRE-RETARDANT MATERIAL STARTING FROM WASTE FROM THE AUTOMOTIVE INDUSTRY**

(30) Priority: 20.11.2023 IT 202300024561
(71) Applicant: Cheers S.r.l., 30026 Portogruaro (VE) (IT)
(72) Inventor: Talon, Aldo, Portogruaro (VE) (IT); Spigariol, Nicolò, Portogruaro (VE) (IT); Greggio, Mirko, Portogruaro (VE) (IT); Meneghetti, Stefano, Portogruaro (VE) (IT); Moretti, Elisa, Portogruaro (VE) (IT)
(74) Representative: Leganza, Alessandro

(57) **Abstract**

The present invention falls into the field of materials which, due to their thermal insulation and fireproof characteristics, are particularly suitable for use in the construction sector and in other sectors. The process suitable for creating these materials involves the use of waste from the automotive industry, thus ennobling an industrial waste.

## Description

### Technical field

The present invention falls into the field of thermo-insulating and fire-retardant materials, which find application in the construction sector as well as in other sectors.

### State of the art

Nowadays the concept of sustainability and therefore of circular economy is particularly felt, also in consideration of the forthcoming entry into force of EU regulatory regulations which will direct developments in the near future. Therefore, today there is a particularly strong need to be able to have products obtained from the recovery or recycling of industrial waste materials.

Furthermore, due to the development of civilization and technological progress, more and more waste has been generated which has led to an increase in environmental pollution leading to global deterioration. Given the current situation, many of the most developed countries in the world have established and encouraged resource recovery systems in order to recover/recycle waste.

The increase in people's awareness of environmental protection has led to the awareness of using waste materials, from which to obtain materials that can then be used to create commonly used or industrial objects.

The automotive industrial sector is also interested in the recovery and recycling of its waste which, otherwise, would have to be disposed of, with related significant costs. In particular, the main waste product of the automotive industry is silica fibres. Silica waste, or silicon dioxide (SiO2) comes in the form of fibers, that is, it comes in an elongated shape and measures from 0.5 to 3.0 centimeters.

To the knowledge of the Applicant, no methods are currently known that allow the reuse of automotive industry waste, in particular silica fibre, other than treating them as industrial waste, with high disposal costs.

### Summary of the Invention

The problem addressed by the present invention is therefore that of being able to effectively reuse waste from the automotive industry, in particular silica fibers having a length of between 0.5 and 3.0 cm, so as to not having to be disposed of as classified waste, thus avoiding the related costs, avoiding an increase in environmental pollution and, possibly, transforming said waste into value-added products.

In addition to the aforementioned problem relating to the effective reuse of automotive industry waste such as silica fibres, at the same time we would like to be able to arrange a process that is at least partially circular.

Finally, as a further problem, we would like this process to provide a material that is heat insulating and at the same time fireproof and, optionally, water-repellent.

Therefore, the present invention solves the aforementioned problem through the process for the preparation of a heat-insulating and fire-retardant material starting from silica fibers as outlined in the attached claims, the definitions of which are an integral part of the present description.

Furthermore, as an additional advantage, the proposed solution involves the use and valorisation of recovery/recycling raw materials, specifically industrial waste, thus being at least partially eco-sustainable and a process, at least partially, circular.

Further characteristics and advantages of the process for the preparation of the heat-insulating and fire-retardant material, as well as the products obtainable from said process of the invention, will emerge from the description of the examples of implementation of the invention, provided as an indication of the invention.

### Detailed description of the Invention

For the purposes of the description herein, the term "and/or", when used in a list of two or more items, means that any of the listed items may be employed alone, or in any combination of two or more than the items listed.

For example, if a combination is described as containing components A, B and/or C, or, A and/or B and/or C, the composition may contain only A; B only; C only; A and B in combination; A and C in combination; B and C in combination; or A, B and C in combination.

The terms "includes", "including" or any other variation thereof, are intended to cover a non-exclusive inclusion, such that a process, method, use, object, etc. which includes a list of elements does not include only those elements but may include other elements not expressly listed or inherent in such process, method, use, article, etc.

An element followed by "includes...a..." does not prevent, without further constraints, the existence of further identical elements in the process, method or use that includes the element.

Generally, during the assembly of car parts, waste is generated consisting of silica fibres, i.e. Silica having an elongated shape, in particular these silica fibers have an average length comprised from 0.5 to 3.0 cm.

A process has been studied to recover and reintroduce a waste product from the automotive industry into the production circuit, using it as a raw material in a process for the preparation of a heat-insulating and fire-retardant material.

Therefore an object of the present invention is a for the preparation of a heat-insulating and flame-retardant material comprising or, alternatively, consisting of the following steps:
(a) preparing a composition comprising:
   - 5% to 25% w/w of sepiolite,
   - 60% to 90% w/w water,
   - optionally, 0.5 to 2.0% w/w hydrophobic agent,
   - 3% to 20% w/w silica fibres with a length of 0.5 to 3.0 cm;
(b) subject the mixture of step a) to mixing;
(c) optionally extrude, inject and/or shape the mixture of step (b),
(d) dry the mixture of step (b) or (c) by heating to a temperature of 150 to 300 °C to give a heat-insulating, flame-retardant material;
e) optionally, calcining the dried mixture of step d) at a temperature of 800°C to 1200°C for a time of from 30 min to 2 hours.

It has in fact been surprisingly found that the process of the present invention allows the use and valorisation of an industrial waste, transforming it into a resource to be used as a raw material for the preparation of a heat-insulating and fireproof material, usable, for example, for the creation panels for the construction sector or other products that can also be used in other sectors.

The heat-insulating and fire-retardant material prepared by the aforementioned process can optionally also be water-repellent, depending on whether or not the hydrophobic agent is added in step a).

Preferably, the heat-insulating and fire-retardant material prepared by the aforementioned process is also water-repellent, where said process is carried out by preparing in step a) a composition comprising from 0.5 to 2.0% w/w of hydrophobic agent.

It has in fact been found that if the composition of step a) includes from 0.5 to 2.0% w/w of hydrophobic agent, the material obtained from the aforementioned process is completely water-repellent. Furthermore, the material floats on water and its water repellency, when distributed on sheets, makes it visually resemble a floating mattress.

The weight to weight percentages (w/w) of step a) refer to the overall weight of the composition obtained at the end of step a).

Preferably, in step a) a composition is prepared comprising:
- from 7% to 15% w/w of sepiolite,
- from 75% to 85% w/w of water,
- optionally, from 0.5 to 2.0% w/w of hydrophobic agent,
- from 5% to 10% w/w of silica fibers with a length of between 0.5 and 3.0 cm;

Preferably, step a) is carried out first by mixing the sepiolite and the water and, optionally, the hydrophobic agent and, after, adding the silica fibers with a length of between 0.5 and 3.0 cm.

More preferably, step a) is carried out first by mixing the sepiolite, water and the hydrophobic agent and, subsequently, by adding the silica fibers with a length of between 0.5 and 3.0 cm.

Preferably, the silica fibers with a length of between 0.5 and 3.0 cm originate from waste consisting of silica fibers from car parts. These are silica fibers with an elongated shape, in particular these silica fibers have an average length of between 0.5 and 3.0 cm.

Therefore, preferably, the origin of silica fibers with a length of 0.5 to 3.0 cm is that of the automotive industry.

However, the process of the invention could also be carried out using virgin silica fibers with a length of between 0.5 and 3.0 cm. However, it is preferred to use silica fiber with a length of 0.5 to 3.0 cm, as waste from the automotive industry for cost and sustainability reasons.

In order to provide silica fiber with a length of 0.5 to 3.0 cm, waste silica fibers from the automotive industry and/or virgin silica fibers can preferably be subjected to a cutting pre-treatment order to give them a length of 0.5-3 cm.

The silica fibers of length from 0.5 to 3.0 cm of the present process can be either in the form of individual signatures or in the form of aggregated fibers, and also in the form of aggregated fibers having the same direction.

The hydrophobic agent is a water-repellent substance, i.e. a substance with reduced wettability by water. Typically, the water-repellent agent is based on silanes and/or siloxane. Preferably the hydrophobic agent is a polysiloxane, a silane-siloxane mixture, or a siloxane resin.

The hydrophobic agent can conveniently be used in the composition of step a) in quantities ranging from 0.5 to 2.0% w/w with respect to the overall weight of the composition of step a). Therefore, preferably, in step a) the composition comprises from 0.5 to 2.0% w/w of hydrophobic agent, or 1% w/w of hydrophobic agent.

It has in fact been found that the presence of the hydrophobic agent in the mixture solves two further problems, that is, it allows the preparation of a water-repellent material and, at the same time, a material which, when subjected to cutting, does not give rise to the formation of significant quantities of dust. In other words, it has been found that the addition of the hydrophobic agent depresses the "dusting" by the material of the invention when subjected to cutting.

Therefore, the embodiment is preferred in which in step a) the composition comprises from 0.5 to 2.0% w/w of hydrophobic agent, or 1% w/w of hydrophobic agent.

It was also surprisingly found that the composition prepared in step b) has such a consistency that it can give rise to plates or other products with their own shape.

The mixture prepared in step b) appears in fact as a semi-solid product or a highly viscous liquid or as a malleable solid.

Therefore, preferably, in step c) the mixture of step b) is extruded or injected to form sheets or other manufactured articles with their own shape.

In step d) the mixture of step b) or c) is dried by heating at a temperature ranging from 150°C to 300°C, preferably at 250°C.

The purpose of step d) is to dry the mixture of step b) or c), i.e. to remove the water from said mixture.

Therefore step d) is carried out for the time necessary to remove the water, and therefore this time depends on the dimensions and thicknesses of the material to be dried.

Step d) can be carried out in an oven.

Step d) can be carried out in the presence of an air flow.

Preferably, step d) is conducted in an oven in the presence of an air flow.

At the end of step d) the heat-insulating and fire-retardant material is obtained.

The optional step e) of calcination of the dried mixture of step d) at a temperature from 800°C to 1200°C for a time ranging from 30 min. to 2 hours, can be performed to prepare a heat-insulating and fire-retardant material which must be used at high temperatures, for example, in car mufflers. The calcination treatment stabilizes the heat-insulating and fire-retardant material for use at high temperatures.

Preferably, step e) is therefore performed, therefore, according to a preferred aspect of the process in question, step e) is not optional.

Preferably, step e) can be carried out at a temperature comprised between 850°C and 1000°C.

More preferably, step e) can be carried out at a temperature comprised between 850°C and 1 000°C for about one hour, or at 850°C for one hour.

The aforementioned process can, alternatively, comprise a further step f), where in said further step f) the material of step e) is treated on the external surface with a hydrophobic agent.

This optional step f) is carried out if the composition of step a) does not include the hydrophobic agent.

However, it is preferable for the composition of step a) to include the hydrophobic agent, rather than carrying out step f) as the performances of water repellency and avoiding the formation of dust when cutting are better with the addition of the hydrophobic agent in the composition of passage a).

Another object is the heat-insulating and fire-retardant material obtainable from the aforementioned process.

In particular, the aforementioned process allows the preparation of a heat-insulating and fire-retardant material comprising from 10% to 75% w/w of sepiolite and from 6% to 45% w/w of silica fibers and, optionally, from 1% at 10% w/w of hydrophobic agent. In fact, once the water has been removed, these are the percentages of the various components in the heat-insulating and fire-retardant material that is obtained from the process of the present invention described above, that is, starting from the composition comprising:
- from 5% to 25% w/w of sepiolite,
- from 60% to 90% w/w of water,
- optionally, from 0.5 to 2.0% w/w of hydrophobic agent,
- from 3% to 20% w/w of silica fibers with a length of between 0.5 and 3.0 cm.

Therefore, a further object is a heat-insulating and fire-retardant material obtainable according to the process described above, comprising from 10% to 75% w/w of sepiolite and from 6% to 45% w/w of silica fibers and, optionally, 1% to 10% w/w of hydrophobic agent.

Therefore, a further object is a heat-insulating and fire-retardant material comprising from 10% to 75% w/w of sepiolite and from 6% to 45% w/w of silica fibers and, optionally, from 1% to 10% w/w of hydrophobic agent.

Preferably, the heat-insulating and fire-retardant material comprises from 10% to 75% w/w of sepiolite, from 6% to 45% w/w of silica fibers and from 1% to 10% w/w of hydrophobic agent.

More preferably, the heat-insulating and fire-retardant material comprises from 45% to 65% w/w of sepiolite and from 30% to 45% w/w of silica fibers and, optionally, from 3% to 7% w/w of hydrophobic agent.

Even more preferably, the heat-insulating and fire-retardant material comprises from 45% to 65% w/w of sepiolite, from 30% to 45% w/w of silica fibers and from 3% to 7% w/w of hydrophobic.

The aforementioned heat-insulating and fire-retardant material has a thermal conductivity coefficient of between 0.040 and 0.050 W/mK, preferably, the thermal conductivity coefficient is equal to 0.045 W/mK.

In particular, the aforementioned process allows the preparation of a heat-insulating and fire-retardant material comprising from 10% to 75% w/w of sepiolite and from 6% to 45% w/w of silica fibers and, optionally, from 1% at 10% w/w of hydrophobic agent, and has an equal thermal conductivity coefficient between 0.040 and 0.050 W/mK.

Preferably, the heat-insulating and fire-retardant material comprises from 10% to 75% w/w of sepiolite and from 6% to 45% w/w of silica fibers and, optionally, from 1% to 10% w/w of hydrophobic agent, and has a thermal conductivity coefficient of between 0.040 and 0.050 W/mK.

More preferably, the heat-insulating and fire-retardant material comprises from 10% to 75% w/w of sepiolite, from 6% to 45% w/w of silica fibers and from 1% to 10% w/w of hydrophobic agent , and has a thermal conductivity coefficient of between 0.040 and 0.050 W/mK.

Even more preferably, the heat-insulating and fire-retardant material comprises from 45% to 65% w/w of sepiolite and from 30% to 45% w/w of silica fibers and, optionally, from 3% to 7% w/w p of hydrophobic agent and has an equal thermal conductivity coefficient between 0.040 and 0.050 W/mK.

Even more preferably, the heat-insulating and fire-retardant material comprises from 45% to 65% w/w of sepiolite, from 30% to 45% w/w of silica fibers and from 3% to 7% w/w of agent hydrophobic and has an equal thermal conductivity coefficient ranging from 0.040 to 0.050 W/mK.

A further object is a composition comprising:
- from 5% to 25% w/w of sepiolite,
- from 60% to 90% w/w of water,
- optionally, from 0.5 to 2.0% w/w of hydrophobic agent,
- from 3% to 20% w/w of silica fibers with a length of between 0.5 and 3.0 cm;

More preferably the composition comprises:
- from 7% to 15% w/w of sepiolite,
- from 75% to 85% w/w of water,
- optionally, from 0.5 to 2.0% w/w of hydrophobic agent,
- from 5% to 10% w/w of silica fibers with a length of between 0.5 and 3.0 cm;

It was also surprisingly found that this composition has such a consistency that it can give rise to plates or other products with their own shape.

This mixture in fact appears as a semi-solid product or a highly viscous liquid or as a malleable solid and allows it to be easily moulded, extruded, injected into molds or otherwise, such as to give rise to a sheet or other manufactured article has its own shape.

Therefore another object is the plate or article with its own shape, comprising the heat-insulating and fireproof material as described above or comprising the aforementioned composition.

Finally, a further object is the use of heat-insulating and fire-retardant material, as described above, as insulation, insulation for buildings, as thermal insulation, as material for the insulation of buildings, as heat shield, as refractory material for ovens , chimneys or fireplaces or as a flame retardant.

Another object is the use of silica fibers having a length from 0.5 to 3.0 cm as automotive industry waste for the creation of heat-insulating and fire-retardant material obtainable from the process described above or for the production of a sheet or artifact with its own shape as described above.

The result of the aforementioned process, if in step c) the mixture from step b) is extruded in the form of a sheet, is an extremely fire-resistant and non-flammable sheet.

### EXPERIMENTAL PART

### Example 1: Preparation of the heat-insulating, fire-retardant and water-repellent material, with calcination step e).

All weight percentage values refer to the wet mass of material.

The viscous paste is prepared by mixing 5-25% (w/w) of sepiolite (Lehvoss Italia srl), 60-90% (w/w) of water and 1-5% (w/w) of agent hydrophobic silane-siloxane mixture (Solvesyl by San Marco) in a container and then mixed with a vertical mixer for 5 minutes until a viscous liquid is reached.

The silica fibers (5-10% w/w), 3.0 to 0.5 cm long, come from industrial processing waste in the automotive field (these are production scraps).

These fibers are defibrated in a rotary grinder to homogenize them and eliminate lumps. The slurry is then combined and manually mixed with the silica fibers inside a container until all of the slurry has permeated into the silica fibers. The mixture is then poured into a rotary grinder and homogenized to eliminate the lumps of silica fibers formed during the mixing phase. Then the dough mixture is poured or extruded into a mold and placed in an oven at 250°C in an air flow, until dry (depending on the thickness), eliminating all the water inserted during the synthesis phase.

The dried sheet ("mat") is then removed from the mold and heat treated in a muffle for 1 hour at 850 °C in an air flow, to allow a phase transition in the crystalline structure of the cordierite binder (sepiolite) , diopside, talc and lime, making it more resistant to water.

The result is a resistant, porous sheet, which absorbs water, but without losing mechanical strength, extremely resistant to fire.

To test the fire resistance, the sheet of material is placed in front of a butane gas torch with a maximum temperature of 1000°C for 15 minutes at a distance of 10 cm and the damage immediately after treatment is assessed. The slab does not react to fire, except extremely slowly, it does not catch fire and at the end of 15 minutes it shows no visible damage or color changes.

ASome properties have been measured:

| | | |
|---|---|---|
| UNI EN 1602: 2013 | Density | 174.8 kg/m³ |
| UNI EN 12089: 2013 | Modulus of rupture (flexure) | 243.9 kPa |
| UNI EN 826: 2013 | Compressive deformation | 22.1 kPa |
| UNI EN 12667: 2002 | Thermal conductivity | 0.046 W/mK |

### Example 2: Preparation of the heat-insulating, fire-retardant and water-repellent material, with calcination step e).

The viscous mixture is prepared by mixing 5-25% w/w of sepiolite (Lehvoss Italia srl), 60-90% w/w of water and 0.5-2% w/w of hydrophobic agent silane-siloxane mixture (Solvesyl by San Marco) in a container and then mixed with a vertical mixer for 5 minutes until a viscous liquid is reached.

Silica fibers 5-10 (% w/w), 3 to 0.5 cm long, come from industrial processing waste in the automotive field (these are production scraps).

These fibers are defibrated in a rotary grinder to homogenize them and eliminate lumps. The slurry is then combined and manually mixed with the silica fibers inside a container until all of the slurry has permeated into the silica fibers. The mixture is then poured into a rotary grinder and homogenized to eliminate the lumps of silica fibers formed during the mixing phase. Then the dough mixture is poured or extruded into a mold and placed in an oven at 250°C in an air flow, until dry (depending on the thickness), eliminating all the water inserted during the synthesis phase.

The result is a sheet ("mat") that is resistant, hydrophobic (floats in water), extremely resistant to fire. To test the fire resistance, the sheet of material is placed in front of a butane gas torch with a maximum temperature of 1000°C for 15 minutes at a distance of 10 cm and the damage immediately after treatment is assessed. The slab does not react to fire, except extremely slowly, it does not catch fire and at the end of 15 minutes it shows no visible damage or color changes.

Thanks to the indications provided in the text, the person in the sector will be able to prepare, starting from silica fibres, the heat-insulating and fire-retardant material, without any intellectual effort.

## Claims

1. Process for the preparation of a heat-insulating and flame-retardant material comprising or, alternatively, consisting of the following steps:
(a) preparing a composition comprising:
- 5% to 25% w/w of sepiolite,
- 60% to 90% w/w water,
- optionally, 0.5 to 2.0% w/w hydrophobic agent,
- 3% to 20% w/w silica fibres with a length of 0.5 to 3.0 cm;
(b) subject the mixture of step a) to mixing;
(c) optionally extrude, inject and/or shape the mixture of step (b),
(d) dry the mixture of step (b) or (c) by heating to a temperature of 150 to 300 °C to give a heat-insulating, flame-retardant material;
e) optionally, calcining the dried mixture of step d) at a temperature of 800°C to 1200°C for a time of from 30 min to 2 hours.

2. The process according to claim 1, wherein step a) is first performed by mixing the sepiolite and the water and, optionally, the hydrophobic agent and, afterwards, adding the silica fibres with a length of 0.5 to 3.0 cm.

3. Process according to any one of claims 1 to 2, wherein the hydrophobic agent is a polysiloxane, a silane-siloxane mixture, or a siloxane resin.

4. Process according to any one of claims 1 to 3, wherein step a) the composition comprises 0.5 to 2.0% w/w hydrophobic agent, or 1% w/w hydrophobic agent.

5. Process according to any one of claims 1 to 4, wherein in step c) the mixture of step b) is extruded or injected to form sheets or other artefact having a shape of its own.

6. Process according to any of claims 1 to 5, in which step e) is performed or in which step e) is not optional.

7. Process according to claim 6, wherein the process comprises a further step f), wherein in said further step f) the material of step e) is treated on the external surface with a hydrophobic agent.

8. Process according to any of claims 1 to 7, in which the silica fibres with a length of 0.5 to 3.0 cm are silica fibres being waste of automotive industry.

9. Thermally insulating and flame retardant material obtainable by the process according to any one of the claims from 1 to 8, comprising from 10% to 75% w/w sepiolite and from 6% to 45% w/w silica fibres and, optionally, from 1% to 10% w/w hydrophobic agent.

10. Thermally insulating and flame retardant material according to claim 9, where said material has a thermal conductivity coefficient of comprised from 0.040 to 0.050 W/mK.

11. Composition comprising:
- 5% to 25% w/w of sepiolite,
- 60% to 90% w/w water,
- optionally, 0.5 to 2.0% w/w hydrophobic agent,
- 3% to 20% w/w silica fibres with a length of 0.5 to 3.0 cm.

12. A sheet or article having its own shape, comprising the thermally insulating and flame-retardant material according to any one of claims 9 to 10 or the composition according to claim 11.

13. Use of the thermally insulating and flame-retardant material according to any one of claims 9 to 10 as an insulator, insulation for building, as thermal insulator, as a material for the insulation of buildings, as a heat shield, as a refractory material for ovens, chimney or fireplaces or as a flame retardant.

14. Use of silica fibers having a length from 0.5 to 3.0 cm as automotive industry waste for the production of heat-insulating and fire-retardant material according to any of claims 9 to 10 or for the production of a sheet or article having its own shape according to claim 12.
